# EUROPEAN PATENT SPECIFICATION

(11) **EP 3 358 474 B1**
(45) Date of publication and mention of the grant of the patent: **08.09.2021**
(21) Application number: 15905242.2
(22) Date of filing: 22.12.2015
(51) Int. Cl.: G01C 21/34

(54) **ROUTE SEARCH METHOD, DEVICE AND APPARATUS, AND NON-VOLATILE COMPUTER STORAGE MEDIUM**
ROUTENSUCHVERFAHREN, VORRICHTUNG UND EINRICHTUNG SOWIE NICHTFLÜCHTIGES COMPUTERSPEICHERMEDIUM
PROCÉDÉ, DISPOSITIF ET APPAREIL DE RECHERCHE D'ITINÉRAIRE, ET SUPPORT DE MÉMORISATION NON VOLATILE D'ORDINATEUR

(30) Priority: 30.09.2015 CN 201510639503
(43) Date of publication of application: 08.08.2018
(73) Proprietor: Baidu Online Network Technology (Beijing) Co., Ltd., Beijing 100085 (CN)
(72) Inventor: LIU, Feng, Beijing 100085 (CN)
(74) Representative: dompatent von Kreisler Selting Werner - Partnerschaft von Patent- und Rechtsanwälten mbB
(86) International application number: PCT/CN2015/098278
(87) International publication number: WO 2017/054332

(56) References cited:
- CN-A- 103 512 581
- CN-A- 104 165 625
- CN-A- 104 536 986
- US-A1- 2011 060 709
- US-A1- 2011 313 648
- None

## Description

The present disclosure claims the benefit of priority from the Chinese patent application No.201510639503.8 entitled "Path Querying Method and Device" filed on September 30 2015.

### Field of the Disclosure

The present disclosure relates to querying technology, and particularly to a path querying method and device, an apparatus and a non-volatile computer storage medium.

### Background of the Disclosure

With the development of communication technology, a terminal increasingly integrates functions so that a system function listing of the terminal includes more and more corresponding applications (APPs). Some applications involve some path querying services, for example, Baidu map. These applications first display a path querying interface to a user for input by the user. Then, according to the information input by the user, query endpoint information can be set, such as information of endpoints like a departure location and a destination, and then a query engine is requested to provide path data. The query engine may execute a path querying operation based on an urban road network and road weights of roads in the urban road network.

However, in some cases, for example, some factors affecting changes of the road weights, such as road width and road surface quality, might change at any time. The road weights of some roads might not be updated in time so that query results obtained from the path querying operations depending on the road weights might be unreasonable, for example, the query results are not optimal query results, or even might be undesirable query results, thereby causing fall of reliability of the path querying operations.

US 2011/0060709 A1 discloses a data processing method that provides a route and a travel time for a user to arrive at the destination by learning the activity states of the user using a probabilistic state transition model and acquired time-series data items.

### Summary of the Disclosure

A plurality of aspects of the present disclosure provide a path querying method, an apparatus and a non-volatile computer storage medium, to improve reliability of a path querying operation.

According to an aspect of the present disclosure, there is provided a path querying method as defined in claim 1.

The above aspect and any possible implementation mode further provide an implementation mode: the obtaining at least one user historical trajectory for reaching the destination according to the destination comprises:
obtaining an urban road network region to which the destination belongs according to the destination; and
according to the urban road network region to which the destination belongs, obtaining at least one user historical trajectory for reaching the urban road network region to which the destination belongs, as at least one user historical trajectory for reaching the destination.

The above aspect and any possible implementation mode further provide an implementation mode: before obtaining an urban road network region to which the destination belongs according to the destination, the method further comprises:
dividing the urban road network with a designated spacing to generate several urban road network regions in the urban road network.

The above aspect and any possible implementation mode further provide an implementation mode: the selecting N road segment sequences from the M road segment sequences as path query results according to a turn probability from each road segment in the at least one road segment included in said each road segment sequence to the road segment's neighboring road segment which is accessible to the destination comprises:
obtaining a combined probability of said each road segment sequence according to the turn probability from each road segment in the at least one road segment included in said each road segment sequence to the road segment's neighboring road segment which is accessible to the destination;
selecting N road segment sequences from the M road segment sequences as the path query results according to the combined probability of said each road segment sequence.

The above aspect and any possible implementation mode further provide an implementation mode: the selecting N road segment sequences from the M road segment sequences as the path query results according to the combined probability of said each road segment sequence comprises:
considering N road segment sequences with a maximum combined probability as the path query results; or
considering a road segment sequence whose combined probability is larger than or equal to a preset probability threshold, as one road segment sequence in the N road segment sequences.

According to another aspect of the present disclosure, there is provided a path querying apparatus as defined in claim 6.

The above aspect and any possible implementation mode further provide an implementation mode: the processing unit is specifically configured to
obtain a urban road network region to which the destination belongs according to the destination; and
according to the urban road network region to which the destination belongs, obtain at least one user historical trajectory for reaching the urban road network region to which the destination belongs, as at least one user historical trajectory for reaching the destination.

The above aspect and any possible implementation mode further provide an implementation mode: the path querying apparatus further comprises a dividing unit configured to
divide the urban road network with a designated spacing to generate several urban road network regions in the urban road network.

The above aspect and any possible implementation mode further provide an implementation mode: the selecting unit is specifically configured to
obtain a combined probability of said each road segment sequence according to a turn probability from each road segment in the at least one road segment included in said each road segment sequence to the road segment's neighboring road segment which is accessible to the destination, and
select N road segment sequences from the M road segment sequences as the path query results according to the combined probability of said each road segment sequence.

The above aspect and any possible implementation mode further provide an implementation mode: the selecting unit is specifically configured to
consider N road segment sequences with a maximum combined probability as the path query result; or
consider a road segment sequence whose combined probability is larger than or equal to a preset probability threshold, as one road segment sequence in the N road segment sequences.

According to a further aspect of the present disclosure, there is provided a non-volatile computer storage medium as defined in claim 11.

As known from the above technical solutions, in the embodiments of the present disclosure, the query data comprising the departure location and the destination are obtained, and then the M road segment sequences are obtained according to the query data so that according to the turn probability from each road segment in the at least one road segment included in said each road segment sequence to the road segment's neighboring road segment which is accessible to the destination, N road segment sequences can be selected from the M road segment sequences as the path query results. Since the query-querying operation is performed without depending on the road weights, this can avoid the problem in the prior art about unreasonable query results because the road weights of some roads cannot be updated in time, thereby improving the reliability of the path querying operation.

In addition, since the user historical trajectory as trajectory big data is employed to execute the path querying operation, the technical solution provided by the present disclosure can be employed to find the user's empirical route, provide more reasonable query results, for example, find a new road, or shun congested road, and substantially improve the user's experience.

### Brief Description of Drawings

To describe technical solutions of embodiments of the present disclosure more clearly, figures to be used in the embodiments or in depictions regarding the prior art will be described briefly. Obviously, the figures described below are only some embodiments of the present disclosure.
Fig. 1 is a flow chart of a path querying method according to an embodiment of the present disclosure;
Fig. 2 is a block diagram of a path querying apparatus according to another embodiment of the present disclosure;
Fig. 3 is a block diagram of a path querying apparatus according to a further embodiment of the present disclosure;
Fig. 4 is a block diagram of a path querying apparatus according to a further embodiment of the present disclosure.

### Detailed Description of Preferred Embodiments

To make objectives, technical solutions and advantages of embodiments of the present disclosure clearer, technical solutions of embodiment of the present disclosure will be described clearly and completely with reference to figures in embodiments of the present disclosure.

It needs to be appreciated that the terminals involved in the embodiments of the present disclosure comprise but are not limited to a mobile phone, a Personal Digital Assistant (PDA), a wireless handheld device, a tablet computer, a Personal Computer (PC), an MP3 player, an MP4 player, and a wearable device (e.g., a pair of smart glasses, a smart watch, or a smart bracelet).

In addition, the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

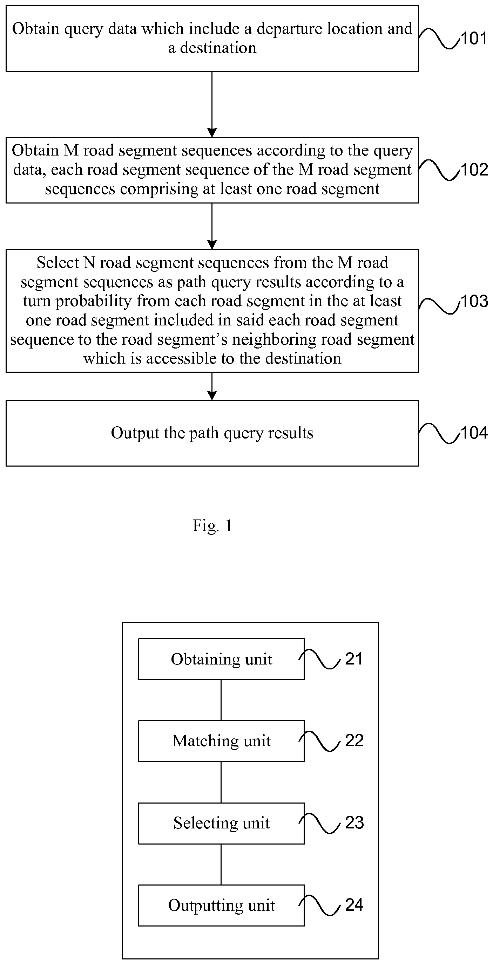

Fig. 1 is a flow chart of a path querying method according to an embodiment of the present disclosure.
101: obtaining query data which include a departure location and a destination.
102: obtaining M road segment sequences according to the query data, each road segment sequence of the M road segment sequences comprising at least one road segment; M being an integer larger than or equal to 2.

The so-called road segment in the field in traffic refers to a transport route between two neighboring nodes on an urban road network. The so-called urban road network refers to a network structure formed by roads which have different functions, classes and district locations, with a certain density and in a suitable form in the urban scope.

The so-called road segment sequence refers to a road segment sequence formed by arranging a series of communicated road segments in an order, and may also be called a path.

103: selecting N road segment sequences from the M road segment sequences as path query results according to a turn probability from each road segment in the at least one road segment included in said each road segment sequence to the road segment's neighboring road segment which is accessible to the destination, N is an integer larger than or equal to 1 and less than or equal to M.

The so-called "accessible to the destination" may mean passing by or through the destination and continuing to move to other places, or considering the destination as a terminal without continuing to move to other places. The present embodiment does not specifically limit in this regard.

104: outputting the path query results.

It needs to be appreciated that all or part of subjects for executing 101-103 may be an application located at a local terminal, or may be a function unit such as a plug-in or Software Development Kit (SDK) located in an application located at the local terminal, or may be an query engine located in the network-side server, or may be a distributed system located on the network side. This is not particularly limited in the present embodiment.

It may be understood that the application may be a native application (nativeAPP) installed on the terminal, or a web application (webAPP) of a browser on the terminal. This is not particularly limited in the present embodiment.

As such, the query data comprising the departure location and destination are obtained, and then the M road segment sequences are obtained according to the query data so that according to the turn probability from each road segment in the at least one road segment included in said each road segment sequence to the road segment's neighboring road segment which is accessible to the destination, N road segment sequences can be selected from the M road segment sequences as the path query results. Since the query-querying operation is performed without depending on the road weights, this can avoid the problem in the prior art about unreasonable query results because the road weights of some roads cannot be updated in time, thereby improving the reliability of the path querying operation.

Usually, some applications involve some path querying services, for example, Baidu map. These applications first display the user a path querying interface so that the user may inputs, then, according to the user-input information, set query endpoint information such as information of endpoints a departure location and a destination, and then request a query engine to provide path data.

Optionally, in a possible implementation mode of the present embodiment, in 101 may be specifically collected a query key word, also called query data, provided by the user.

Specifically, this may be implemented by a query command triggered by the user. Specifically, the following two manners may be employed to trigger the query command:

### Manner 1:

The user may input or select the query key word on a page displayed by the current application, and the query key word may comprise a departure location and a destination. Then, the user clicks a query button on the page to trigger the query command which includes the query key word. As such, after the query command is received, the query key word included therein may be parsed.

### Manner 2:

The input content input by the user on the page displayed by the current application is obtained in real time by means of asynchronous uploading technology such as Ajax asynchronous uploading or Jsonp asynchronous uploading. To distinguish from the query key word, the input content at this time may be called input key word. Then, an input character is obtained to trigger the query command which includes the query key word. As such, after the query command is received, the query key word included therein may be parsed. Specifically, an interface such as an Ajax interface or Jsonp interface may be specifically provided. These interfaces may be written in a language such as Java or Hypertext Processor (PHP) language, and its specific invocation may be written by using a language such as Jquery or native JavaScript.

In most cases, since the purpose of the user's query might be random and not specific, the departure location and destination included in the user-provided query data might be uncertain to a certain degree. Therefore, it is feasible to perform proper expansion processing for the departure location and destination included in the query data to expand the scope of the query starting point and query finishing point of the query of this time so that the query starting point is no longer limited to the departure location and the query finishing point is no longer limited to the destination. As such, this can make the query results more conform to the user's real travel intention.

In the present disclosure, it is feasible to use an urban road network region to which the departure location included by the query data belongs to expand the departure location, and use an urban road network region to which the destination included by the query data belongs to expand the destination to execute the path querying operation.

The so-called urban road network refers to a network structure formed by roads which have different functions, classes and district locations, with a certain density and in a suitable form in the urban scope.

In this implementation mode, the so-called urban road network region refers to a designated region in the urban road network. These designated regions may be several regions in the urban road network randomly divided based on the urban road network, or may further be several urban road network regions generated by dividing the urban road network and spaced apart a designated distance. This is not specifically limited in the present embodiment.

Optionally, in a possible implementation mode of the present embodiment, in 102, it is specifically feasible to obtain the urban road network region to which the departure location belongs according to the departure location included in the query data, and obtain the urban road network region to which the destination belongs according to the destination included in the query data, and then, perform road segment matching processing in the urban road network according to the urban road network region to which the departure location belongs and the urban road network region to which the destination belongs, to obtain the matched M road segment sequences. The road segments included in each road segment sequence in these road segment sequences all are road segments communicated in turn from the urban road network region to which the departure location belongs to the urban road network region to which the destination belongs, namely, road segments connected end to end. As such, the scope of the query starting point of the query of this time and the query finishing point of the query of this time is expanded so that the query so that the query starting point is no longer limited to the departure location included in the query data and the query finishing point is no longer limited to the destination included in the query data. Therefore, it is possible to obtain more matched road segment sequences and thereby enrich data processing sources on which the path querying operation is based.

According to the invention, in 103, it is specifically to, according to the destination, obtain at least one user historical trajectory for reaching the destination, and then obtain a historical road segment sequence corresponding to each user historical trajectory in the at least one user historical trajectory, then according to the historical road segment sequence corresponding to said each user historical trajectory, obtain a number of first trajectories of passing each road segment included in the historical road segment sequence, and a number of second trajectories of passing the road segment and then passing each neighboring road segment of the road segment, and then, according to the number of first trajectories and the number of second trajectories, obtain a turn probability from each road segment included in the historical road segment sequence to the road segment's each neighboring road segment which is accessible to the destination. A ratio of the number of second trajectories to the number of first trajectories, namely, the number of second trajectories/the number of first trajectories, is considered as the turn probability from each road segment included in the historical road segment sequence to the road segment's each neighboring road segment which is accessible to the destination.

As such, it is feasible to obtain the turn probability from each road segment corresponding to the user historical trajectory in the urban road network to the road segment's each neighboring road segment which is accessible to the destination. However, the turn probability from other road segments in the urban road network to the road segment's each neighboring road segment which is accessible to the destination may be recorded as 0.

The so-called user historical trajectory is a set formed by the user's several trajectory points. In the present disclosure, the user historical trajectory may be matched to the road segment in the urban road network to execute subsequent path querying operation. A specific matching method may employ a matching algorithm in the prior art, for example, Hidden Markov Model. Reference may be made to relevant content in the prior art for detailed depictions, and detailed depictions are not provided any more here.

Similarly, in this implementation mode, the location may be expanded by using the aforesaid location expanding method. Specifically, it is feasible to obtain the urban road network region to which the destination belongs according to the destination, and then, according to the urban road network region to which the destination belongs, obtain at least one user historical trajectory for reaching the urban road network region to which the destination belongs, as at least one user historical trajectory for reaching the destination. As such, since the scope of the query finishing point of the query of this time is expanded so that the query finishing point is no longer limited to the destination, it is possible to obtain more user historical trajectories as the basis for the path querying operation and thereby enrich data sources on which the path querying operation is based.

The expression "at least one user historical trajectory for reaching the urban road network region to which the destination belongs" may mean a user historical trajectory for passing by or through the urban road network region to which the destination belongs and continuing to move to other places, or may mean a user historical trajectory for considering the urban road network region to which the destination belongs as a terminal without continuing to move to other places. The present embodiment does not specifically limit in this regard.

In a specific implementation procedure, it is feasible to form an individual independent road network from road segments corresponding to these user historical trajectories reaching each urban road network region. In this independent road network, each user historical trajectory can reach the urban road network region. If the user historical trajectory is the user historical trajectory for passing by or through a certain urban road network region and continuing to move to other urban road network regions, it is feasible in the independent road network to delete partial paths after said certain urban road network region so that the finishing point of each user historical trajectory in the independent road network is said certain urban road network region.

To improve the efficiency of the path querying operation, the independent road network may be used to index the road segments corresponding to these user historical trajectories. As such, when at least one user historical trajectory for reaching a certain urban road network region is queried according to said certain urban road network region, it is feasible to perform the query directly according to the indices, which can effectively improve the efficiency of the path querying operation.

Optionally, in a possible implementation mode of the present embodiment, in 103, it is specifically feasible to obtain a combined probability of said each road segment sequence according to a turn probability from each road segment in the at least one road segment included in said each road segment sequence to the road segment's neighboring road segment which is accessible to the destination, and then select N road segment sequences from the M road segment sequences as the path query results according to the combined probability of said each road segment sequence.

In this implementation mode, assume that a road segment sequence includes n road segments, namely, link1, link2, ..., linkn-1, linkn in turn from the departure location (namely, the urban road network region to which the departure location belongs) to the destination (namely, the urban road network region to which the destination belongs), wherein n is an integer larger than or equal to 2. The turn probability of linkn-1 to linkn is expressed as Pₗᵢₙₖₙ, and the combined probability of the road segment sequence may be a product of all turn probabilities and may be expressed by Πⁿᵢ₌₂Pₗᵢₙₖₙ.

In a specific implementation procedure, N road segment sequences with a maximum combined probability may specifically be considered as the path query result. For example, it is specifically feasible to sort all road segment sequences in a descending order of the combined probabilities, and select top N road segment sequences as the query result of the path querying operation.

In another specific implementation procedure, it is specifically feasible to consider a road segment sequence whose combined probability is larger than or equal to a preset probability threshold, as one road segment sequence in the N road segment sequences.

In the present implementation, the query data comprising the departure location and destination are obtained, and then the M road segment sequences are obtained according to the query data so that according to the turn probability from each road segment in the at least one road segment included in said each road segment sequence to the road segment's neighboring road segment which is accessible to the destination, N road segment sequences can be selected from the M road segment sequences as the path query results. Since the query-querying operation is performed without depending on the road weights, this can avoid the problem in the prior art about unreasonable query results because the road weights of some roads cannot be updated in time, thereby improving the reliability of the path querying operation.

In addition, since the user historical trajectory as trajectory big data is employed to execute the path querying operation, the technical solution provided by the present disclosure can be employed to find the user's empirical route, provide more reasonable query results, for example, find a new road, or shun congested road, and substantially improve the user's experience.

In the above embodiments, different emphasis is placed on respective embodiments, and reference may be made to related depictions in other embodiments for portions not detailed in a certain embodiment.

Fig. 2 is a block diagram of a path querying apparatus according to another embodiment of the present disclosure. As shown in Fig. 2, the path querying apparatus in the present embodiment comprises an obtaining unit 21, a matching unit 22, a selecting unit 23 and an outputting unit 24, wherein the obtaining unit 21 is configured to obtain query data which include a departure location and a destination; the matching unit 22 is configured to obtain M road segment sequences according to the query data, each road segment sequence of the M road segment sequences comprising at least one road segment, M being an integer larger than or equal to 2; the selecting unit 23 is configured to select N road segment sequences from the M road segment sequences as path query results according to a turn probability from each road segment in the at least one road segment included in said each road segment sequence to the road segment's neighboring road segment which is accessible to the destination, N being an integer larger than or equal to 1 and less than or equal to M; the outputting unit 24 is configured to output the path query results.

It needs to be appreciated that all or part of the path querying apparatus according to the present embodiment may be an application located at a local terminal, or may be a function unit such as a plug-in or Software Development Kit (SDK) located in an application located at the local terminal, or may be an query engine located in the network-side server, or may be a distributed system located on the network side. This is not particularly limited in the present embodiment.

It may be understood that the application may be a native application (nativeAPP) installed on the terminal, or a web application (webAPP) of a browser on the terminal. This is not particularly limited in the present embodiment.

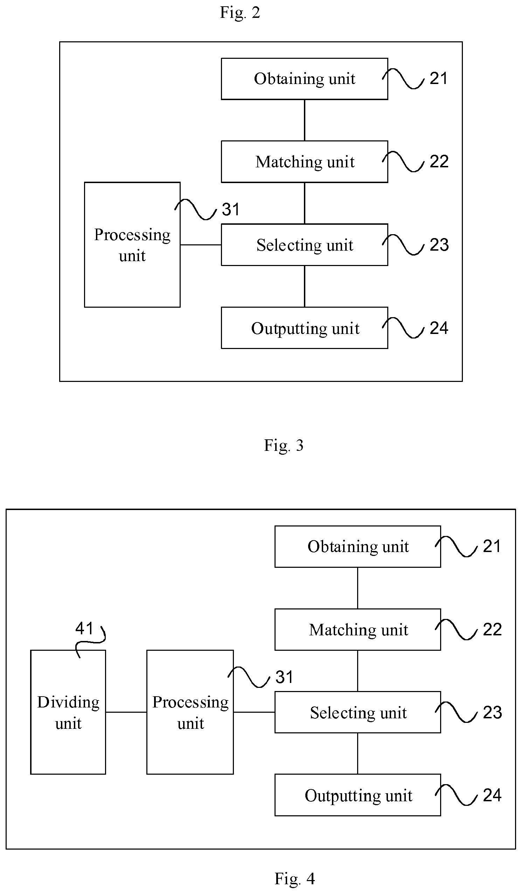

As shown in Fig. 3, the path querying apparatus according to the present embodiment further comprises a processing unit 31 configured to obtain at least one user historical trajectory of reaching the destination according to the destination; obtain a historical road segment sequence corresponding to each user historical trajectory in the at least one user historical trajectory; according to the historical road segment sequence corresponding to said each user historical trajectory, obtain a number of first trajectories for passing each road segment included in the historical road segment sequence, and a number of second trajectories of passing the road segment and then passing each neighboring road segment of the road segment; and obtain a ratio of the number of second trajectories to the number of first trajectories as the turn probability from each road segment included in the historical road segment sequence to the road segment's each neighboring road segment which is accessible to the destination.

Specifically, the processing unit 31 is specifically configured to obtain the urban road network region to which the destination belongs according to the destination; and then, according to the urban road network region to which the destination belongs, obtain at least one user historical trajectory for reaching the urban road network region to which the destination belongs, as at least one user historical trajectory for reaching the destination.

Optionally, in a possible implementation mode of the present embodiment, as shown in Fig. 4, the path querying apparatus according to the present embodiment may further comprise a dividing unit 41 configured to divide the urban road network with a designated spacing to generate several urban road network regions in the urban road network.

Optionally, in a possible implementation mode of the present embodiment, the selecting unit 23 is specifically configured to obtain a combined probability of said each road segment sequence according to a turn probability from each road segment in the at least one road segment included in said each road segment sequence to the road segment's neighboring road segment which is accessible to the destination, and then select N road segment sequences from the M road segment sequences as the path query results according to the combined probability of said each road segment sequence.

In a specific implementation procedure, the selecting unit 23 is specifically configured to consider N road segment sequences with a maximum combined probability as the path query result.

In another specific implementation procedure, the selecting unit 23 is specifically configured to consider a road segment sequence whose combined probability is larger than or equal to a preset probability threshold, as one road segment sequence in the N road segment sequences.

It needs to be appreciated that the method in the embodiment corresponding to Fig. 1 may be implemented by the path querying apparatus according to the present embodiment. Reference may be made to relevant content in the embodiment corresponding to Fig. 1 for detailed description, which will not be detailed any longer here.

In the present embodiment, the obtaining unit obtains the query data comprising the departure location and destination, and then the matching unit obtains the M road segment sequences according to the query data so that the selecting unit selects N road segment sequences from the M road segment sequences as the path query results according to the turn probability from each road segment in the at least one road segment included in said each road segment sequence to the road segment's neighboring road segment which is accessible to the destination. Since the query-querying operation is performed without depending on the road weights, this can avoid the problem in the prior art about unreasonable query results because the road weights of some roads cannot be updated in time, thereby improving the reliability of the path querying operation.

In addition, since the user historical trajectory as trajectory big data is employed to execute the path querying operation, the technical solution provided by the present disclosure can be employed to find the user's empirical route, provide a more reasonable query result, for example, find a new road, or shun congested road, and substantially improve the user's experience.

Those skilled in the art can clearly understand that for purpose of convenience and brevity of depictions, reference may be made to corresponding procedures in the aforesaid method embodiments for specific operation procedures of the system, apparatus and units described above, which will not be detailed any more.

In the embodiments provided by the present disclosure, it should be understood that the revealed system, apparatus and method can be implemented in other ways. In addition, mutual coupling or direct coupling or communicative connection as displayed or discussed may be indirect coupling or communicative connection performed via some interfaces, means or units and may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, read-only memory (ROM), a random access memory (RAM), magnetic disk, or an optical disk.

Finally, it is appreciated that the above embodiments are only used to illustrate the technical solutions of the present disclosure, not to limit the present disclosure.

## Claims

1. A path querying method, wherein the method comprises:
obtaining query data which include a departure location and a destination (101);
obtaining M road segment sequences according to the query data, each road segment sequence in the M road segment sequences comprising at least one road segment, M being an integer larger than or equal to 2 (102);
selecting N road segment sequences from the M road segment sequences as path query results according to a turn probability from each road segment in the at least one road segment included in said each road segment sequence to a road segment's neighboring road segment which is accessible to the destination, N being an integer larger than or equal to 1 and less than or equal to M (103);
outputting the path query results (104);
wherein before selecting N road segment sequences from the M road segment sequences as path query results according to a turn probability from each road segment in the at least one road segment included in said each road segment sequence to the road segment's neighboring road segment which is accessible to the destination, the method further comprises:
obtaining at least one user historical trajectory for reaching the destination according to the destination;
obtaining a historical road segment sequence corresponding to each user historical trajectory in the at least one user historical trajectory;
**characterised by**:
according to the historical road segment sequence corresponding to said each user historical trajectory, obtaining the number of first trajectories of passing each road segment included in the historical road segment sequence, and the respective number of second trajectories of passing the road segment and then respectively passing each neighboring road segment of the road segment which is accessible to the destination; and
obtaining a respective ratio of the respective number of second trajectories to the number of first trajectories as the turn probability from each road segment included in the historical road segment sequence to the road segment's each neighboring road segment which is accessible to the destination.

2. The method according to claim 1, wherein the obtaining at least one user historical trajectory for reaching the destination according to the destination comprises:
obtaining an urban road network region to which the destination belongs according to the destination; and
according to the urban road network region to which the destination belongs, obtaining at least one user historical trajectory for reaching the urban road network region to which the destination belongs, as at least one user historical trajectory for reaching the destination.

3. The method according to claim 2, wherein before obtaining an urban road network region to which the destination belongs according to the destination, the method further comprises:
dividing the urban road network with a designated spacing to generate several urban road network regions in the urban road network.

4. The method according to any one of claims 1-3, wherein the selecting N road segment sequences from the M road segment sequences as path query results according to a turn probability from each road segment in the at least one road segment included in said each road segment sequence to a road segment's neighboring road segment which is accessible to the destination comprises:
obtaining a product of all turn probabilities from each road segment in the at least one road segment included in said each road segment sequence to the road segment's neighboring road segment which is accessible to the destination, as a combined probability of said each road segment sequence;
selecting N road segment sequences from the M road segment sequences as the path query results according to the combined probability of said each road segment sequence.

5. The method according to claim 4, wherein the selecting N road segment sequences from the M road segment sequences as the path query results according to the combined probability of said each road segment sequence comprises:
considering N road segment sequences with a maximum combined probability as the path query results; or
considering a road segment sequence whose combined probability is larger than or equal to a preset probability threshold, as one road segment sequence in the N road segment sequences.

6. A path querying apparatus, comprising:
means (21) for obtaining query data which include a departure location and a destination;
means (22) for obtaining M road segment sequences according to the query data, each road segment sequence in the M road segment sequences comprising at least one road segment, M being an integer larger than or equal to 2;
means (23) for selecting N road segment sequences from the M road segment sequences as path query results according to a turn probability from each road segment in the at least one road segment included in said each road segment sequence to the road segment's neighboring road segment which is accessible to the destination, N being an integer larger than or equal to 1 and less than or equal to M;
means for outputing the path query results;
means (31) for obtainnig at least one user historical trajectory of reaching the destination according to the destination;
means (31) for obtaining a historical road segment sequence corresponding to each user historical trajectory in the at least one user historical trajectory;
the apparatus further **characterised by**:
means (31) for, according to the historical road segment sequence corresponding to said each user historical trajectory, obtaining the number of first trajectories of passing each road segment included in the historical road segment sequence, and the respective number of second trajectories of passing the road segment and then respectively passing each neighboring road segment of the road segment which is accessible to the destination; and
means (31) for obtaining a respective ratio of the respective number of second trajectories to the number of first trajectories as the turn probability from each road segment included in the historical road segment sequence to the road segment's each neighboring road segment which is accessible to the destination.

7. The apparatus according to claim 6, wherein the means (31) for obtaining at least one user historical trajectory of reaching the destination according to the destination comprises:
means (31) for obtain a urban road network region to which the destination belongs according to the destination; and
means (31) for according to the urban road network region to which the destination belongs, obtain at least one user historical trajectory of reaching the urban road network region to which the destination belongs, as at least one user historical trajectory for reaching the destination.

8. The apparatus according to claim 7, wherein the apparatus further comprises:
means (41) for dividing the urban road network with a designated spacing to generate several urban road network regions in the urban road network.

9. The apparatus according to any one of claims 6-8, wherein the means (23) for selecting N road segment sequences from the M road segment sequences as path query results according to a turn probability from each road segment in the at least one road segment included in said each road segment sequence to the road segment's neighboring road segment which is accessible to the destination comprises:
Means (23) for obtaining a product of all turn probabilities from each road segment in the at least one road segment included in said each road segment sequence to the road segment's neighboring road segment which is accessible to the destination, as a combined probability of said each road segment sequence, and
Means (23) for selecting N road segment sequences from the M road segment sequences as the path query results according to the combined probability of said each road segment sequence.

10. The apparatus according to claim 9, wherein the means for selecting N road segment sequences from the M road segment sequences as the path query results according to the combined probability of said each road segment sequence comprises:
means (23) for considering N road segment sequences with a maximum combined probability as the path query result; or
means (23) for considering a road segment sequence whose combined probability is larger than or equal to a preset probability threshold, as one road segment sequence in the N road segment sequences.

11. A non-volatile computer storage medium in which one or more programs are stored, an apparatus of any one of claims 6-10 being enabled to execute the method of any one of claims 1-5 when said one or more programs are executed by the apparatus.

## Patentansprüche

1. Wegabfrageverfahren, wobei das Verfahren umfasst:
Ermitteln von Abfragedaten, die einen Abreiseort und einen Zielort aufweisen (101);
Ermitteln von M Straßensegmentsequenzen entsprechend den Abfragedaten, wobei jede Straßensegmentsequenz in den M Straßensegmentsequenzen mindestens ein Straßensegment aufweist, wobei M eine Ganzzahl von größer als oder gleich 2 ist (102);
Auswählen von N Straßensegmentsequenzen aus den M Straßensegmentsequenzen als Wegabfrageergebnisse entsprechend einer Abbiegewahrscheinlichkeit von jedem Straßensegment in dem mindestens einen Straßensegment, das in jeder Straßensegmentsequenz enthalten ist, auf ein einem Straßensegment benachbartes Straßensegment, das zu dem Zielort hin zugänglich ist, wobei N eine Ganzzahl von größer als oder gleich 1 und kleiner als oder gleich M ist (103);
Ausgeben der Wegabfrageergebnisse (104);
wobei vor dem Auswählen von N Straßensegmentsequenzen aus den M Straßensegmentsequenzen als Wegabfrageergebnisse entsprechend einer Abbiegewahrscheinlichkeit von jedem Straßensegment in dem mindestens einen Straßensegment, das in jeder Straßensegmentsequenz enthalten ist, auf das dem Straßensegment benachbarte Straßensegment, das zu dem Zielort hin zugänglich ist, das Verfahren ferner umfasst:
Ermitteln mindestens einer historischen Bewegungsstrecke zum Erreichen des Zielorts entsprechend dem Zielort;
Ermitteln einer historischen Straßensegmentsequenz, die jeder historischen Bewegungsstrecke eines Benutzers entspricht, in der mindestens einen historischen Bewegungsstrecke eines Benutzers;
**gekennzeichnet durch**:
entsprechend der historischen Straßensegmentsequenz, die der historischen Bewegungsstrecke jedes Benutzers entspricht, Ermitteln der Anzahl von ersten Bewegungsstrecken des Passierens jedes Straßensegments, das in der historischen Straßensegmentsequenz enthalten ist, und der jeweiligen Anzahl von zweiten Bewegungsstrecken des Passierens des Straßensegments und dann des jeweiligen Passierens jedes benachbarten Straßensegments des Straßensegments, das zu dem Zielort hin zugänglich ist; und
Ermitteln eines jeweiligen Verhältnisses der jeweiligen Anzahl von zweiten Bewegungsstrecken zu der Anzahl von ersten Bewegungsstrecken als Abbiegewahrscheinlichkeit von jedem Straßensegment, das in der historischen Straßensegmentsequenz enthalten ist, auf jedes einem Straßensegment benachbarte Straßensegment, das zu dem Zielort hin zugänglich ist.

2. Verfahren nach Anspruch 1, bei dem das Ermitteln der mindestens einen historischen Bewegungsstrecke eines Benutzers zum Erreichen des Zielorts entsprechend dem Zielort umfasst:
Ermitteln einer urbanen Straßennetzregion, zu der der Zielort gehört, entsprechend dem Zielort; und
entsprechend der urbanen Straßennetzregion, zu der der Zielort gehört, Ermitteln mindesten einer historischen Bewegungsstrecke eines Benutzers zum Erreichen der urbanen Straßennetzregion, zu der der Zielort gehört, als mindestens eine historische Bewegungsstrecke eines Benutzers zum Erreichen des Zielorts.

3. Verfahren nach Anspruch 2, bei dem vor dem Ermitteln einer urbanen Straßennetzregion, zu der der Zielort entsprechend dem Zielort gehört, das Verfahren ferner umfasst:
Unterteilen des urbanen Straßennetzes mit einer vorgesehenen Beabstandung zum Erzeugen mehrerer urbaner Straßennetzregionen in dem urbanen Straßennetz.

4. Verfahren nach einem der Ansprüche 1-3, bei dem das Auswählen von N Straßensegmentsequenzen aus den M Straßensegmentsequenzen als Wegabfrageergebnisse entsprechend einer Abbiegewahrscheinlichkeit von jedem Straßensegment in dem mindestens einen Straßensegment, das in jeder Straßensegmentsequenz enthalten ist, auf ein einem Straßensegment benachbartes Straßensegment, das zu dem Zielort hin zugänglich ist, umfasst:
Ermitteln eines Produkts sämtlicher Abbiegewahrscheinlichkeiten von dem Straßensegment in dem mindestens einen Straßensegment, das in jeder Straßensegmentsequenz enthalten ist, auf ein einem Straßensegment benachbartes Straßensegment, das zu dem Zielort hin zugänglich ist, als kombinierte Wahrscheinlichkeit jeder Straßensegmentsequenz;
Auswählen von N Straßensegmentsequenzen aus den M Straßensegmentsequenzen als Wegabfrageergebnisse entsprechend der kombinierten Wahrscheinlichkeit jeder Straßensegmentsequenz.

5. Verfahren nach Anspruch 4, bei dem das Auswählen von N Straßensegmentsequenzen aus den M Straßensegmentsequenzen als Wegabfrageergebnisse entsprechend der kombinierten Wahrscheinlichkeit jeder Straßensegmentsequenz umfasst:
Berücksichtigen von N Straßensegmentsequenzen mit einer maximalen kombinierten Wahrscheinlichkeit als Wegabfrageergebnisse; oder
Berücksichtigen einer Straßensegmentsequenz, deren kombinierte Wahrscheinlichkeit größer als oder gleich einem vorgegebenen Wahrscheinlichkeitsschwellwert ist, als eine Straßensegmentsequenz in den N Straßensegmentsequenzen.

6. Wegabfragevorrichtung, die aufweist:
eine Einrichtung (21) zum Ermitteln von Abfragedaten, die einen Abreiseort und einen Zielort aufweisen;
eine Einrichtung (22) zum Ermitteln von M Straßensegmentsequenzen entsprechend den Abfragedaten, wobei jede Straßensegmentsequenz in den M Straßensegmentsequenzen mindestens ein Straßensegment aufweist, wobei M eine Ganzzahl von größer als oder gleich 2 ist;
eine Einrichtung (23) zum Auswählen von N Straßensegmentsequenzen aus den M Straßensegmentsequenzen als Wegabfrageergebnisse entsprechend einer Abbiegewahrscheinlichkeit von jedem Straßensegment in dem mindestens einen Straßensegment, das in jeder Straßensegmentsequenz enthalten ist, auf ein einem Straßensegment benachbartes Straßensegment, das zu dem Zielort hin zugänglich ist, wobei N eine Ganzzahl von größer als oder gleich 1 und kleiner als oder gleich M ist;
eine Einrichtung zum Ausgeben der Wegabfrageergebnisse;
eine Einrichtung (31) zum Ermitteln mindestens einer historischen Bewegungsstrecke zum Erreichen des Zielorts entsprechend dem Zielort;
eine Einrichtung (31) zum Ermitteln einer historischen Straßensegmentsequenz, die jeder historischen Bewegungsstrecke eines Benutzers entspricht, in der mindestens einen historischen Bewegungsstrecke eines Benutzers;
wobei die Vorrichtung ferner **gekennzeichnet ist durch**:
eine Einrichtung (31) zum Ermitteln, entsprechend der historischen Straßensegmentsequenz, die der historischen Bewegungsstrecke jedes Benutzers entspricht, der Anzahl von ersten Bewegungsstrecken des Passierens jedes Straßensegments, das in der historischen Straßensegmentsequenz enthalten ist, und der jeweiligen Anzahl von zweiten Bewegungsstrecken des Passierens des Straßensegments und dann des jeweiligen Passierens jedes benachbarten Straßensegments des Straßensegments, das zu dem Zielort hin zugänglich ist; und
eine Einrichtung (31) zum Ermitteln eines jeweiligen Verhältnisses der jeweiligen Anzahl von zweiten Bewegungsstrecken zu der Anzahl von ersten Bewegungsstrecken als Abbiegewahrscheinlichkeit von jedem Straßensegment, das in der historischen Straßensegmentsequenz enthalten ist, auf jedes einem Straßensegment benachbarte Straßensegment, das zu dem Zielort hin zugänglich ist.

7. Vorrichtung nach Anspruch 6, wobei die Einrichtung (31) zum Ermitteln der mindestens einen historischen Bewegungsstrecke eines Benutzers zum Erreichen des Zielorts entsprechend dem Zielort aufweist:
eine Einrichtung (31) zum Ermitteln einer urbanen Straßennetzregion, zu der der Zielort gehört, entsprechend dem Zielort; und
eine Einrichtung (31) zum Ermitteln, entsprechend der urbanen Straßennetzregion, zu der der Zielort gehört, mindesten einer historischen Bewegungsstrecke eines Benutzers zum Erreichen der urbanen Straßennetzregion, zu der der Zielort gehört, als mindestens eine historische Bewegungsstrecke eines Benutzers zum Erreichen des Zielorts.

8. Vorrichtung nach Anspruch 7, wobei die Vorrichtung ferner aufweist:
eine Einrichtung (41) zum Unterteilen des urbanen Straßennetzes mit einer vorgesehenen Beabstandung zum Erzeugen mehrerer urbaner Straßennetzregionen in dem urbanen Straßennetz.

9. Verfahren nach einem der Ansprüche 6-8, bei dem die Einrichtung (23) zum Auswählen von N Straßensegmentsequenzen aus den M Straßensegmentsequenzen als Wegabfrageergebnisse entsprechend einer Abbiegewahrscheinlichkeit von jedem Straßensegment in dem mindestens einen Straßensegment, das in jeder Straßensegmentsequenz enthalten ist, auf ein einem Straßensegment benachbartes Straßensegment, das zu dem Zielort hin zugänglich ist, umfasst:
eine Einrichtung (23) zum Ermitteln eines Produkts sämtlicher Abbiegewahrscheinlichkeiten von dem Straßensegment in dem mindestens einen Straßensegment, das in jeder Straßensegmentsequenz enthalten ist, auf ein einem Straßensegment benachbartes Straßensegment, das zu dem Zielort hin zugänglich ist, als kombinierte Wahrscheinlichkeit jeder Straßensegmentsequenz; und
eine Einrichtung (23) zum Auswählen von N Straßensegmentsequenzen aus den M Straßensegmentsequenzen als Wegabfrageergebnisse entsprechend der kombinierten Wahrscheinlichkeit jeder Straßensegmentsequenz.

10. Vorrichtung nach Anspruch 9, bei der die Einrichtung zum Auswählen von N Straßensegmentsequenzen aus den M Straßensegmentsequenzen als Wegabfrageergebnisse entsprechend der kombinierten Wahrscheinlichkeit jeder Straßensegmentsequenz umfasst:
eine Einrichtung (23) zum Berücksichtigen von N Straßensegmentsequenzen mit einer maximalen kombinierten Wahrscheinlichkeit als Wegabfrageergebnisse; oder
eine Einrichtung (23) zum Berücksichtigen einer Straßensegmentsequenz, deren kombinierte Wahrscheinlichkeit größer als oder gleich einem vorgegebenen Wahrscheinlichkeitsschwellwert ist, als eine Straßensegmentsequenz in den N Straßensegmentsequenzen.

11. Nichtflüchtiges Computerspeichermedium, in dem ein oder mehrere Programme gespeichert sind, wobei eine Vorrichtung nach einem der Ansprüche 6-10 in die Lage versetzt wird, das Verfahren nach einem der Ansprüche 1-5 auszuführen, wenn ein oder mehrere Programme von der Vorrichtung ausgeführt werden.

## Revendications

1. Procédé d'interrogation de trajet, le procédé comprenant :
l'obtention de données d'interrogation qui comportent un emplacement de départ et une destination (101) ;
l'obtention de M séquences de segments de route selon les données d'interrogation, chaque séquence de segment de route dans les M séquences de segments de route comprenant au moins un segment de route, M étant un entier supérieur ou égal à 2 (102) ;
la sélection de N séquences de segments de route à partir des M séquences de segments de route en tant que résultats d'interrogation de trajet selon une probabilité de virage à partir de chaque segment de route dans l'au moins un segment de route inclus dans ladite chaque séquence de segment de route vers un segment de route voisin du segment de route qui est accessible à la destination, N étant un entier supérieur ou égal à 1 et inférieur ou égal à M (103) ;
la génération des résultats de l'interrogation de trajet (104) ;
avant la sélection de N séquences de segments de route à partir des M séquences de segments de route en tant que résultats d'interrogation de trajet selon une probabilité de virage à partir de chaque segment de route dans l'au moins un segment de route inclus dans ladite chaque séquence de segment de route vers le segment de route voisin du segment de route qui est accessible à la destination, le procédé comprenant en outre :
l'obtention d'au moins une trajectoire historique d'utilisateur pour atteindre la destination selon la destination ;
l'obtention d'une séquence de segment de route historique correspondant à chaque trajectoire historique d'utilisateur dans l'au moins une trajectoire historique d'utilisateur ;
**caractérisé par** :
selon la séquence de segment de route historique correspondant à ladite trajectoire historique de chaque utilisateur, l'obtention du nombre de premières trajectoires de passage de chaque segment de route incluses dans la séquence de segment de route historique, et le nombre respectif de secondes trajectoires de passage du segment de route puis de passage respectivement de chaque segment de route voisin du segment de route qui est accessible à la destination ; et
l'obtention d'un rapport respectif du nombre respectif de secondes trajectoires au nombre de premières trajectoires en tant que probabilité de virage de chaque segment de route inclus dans la séquence de segment de route historique au segment de route de chaque segment de route voisin qui est accessible à la destination.

2. Procédé selon la revendication 1, dans lequel l'obtention d'au moins une trajectoire historique d'utilisateur pour atteindre la destination selon la destination comprend :
l'obtention d'une région de réseau routier urbain à laquelle appartient la destination selon la destination ; et
selon la région de réseau routier urbain à laquelle appartient la destination, l'obtention d'au moins une trajectoire historique d'utilisateur pour atteindre la région de réseau routier urbain à laquelle appartient la destination, en tant qu'au moins une trajectoire historique d'utilisateur pour atteindre la destination.

3. Procédé selon la revendication 2, dans lequel avant l'obtention d'une région de réseau routier urbain à laquelle appartient la destination selon la destination, le procédé comprend en outre :
la division du réseau routier urbain avec un espacement désigné pour générer plusieurs régions de réseau routier urbain dans le réseau routier urbain.

4. Procédé selon l'une quelconque des revendications 1 à 3, dans lequel la sélection de N séquences de segments de route à partir des M séquences de segments de route en tant que résultats d'interrogation de trajet selon une probabilité de virage à partir de chaque segment de route dans l'au moins un segment de route inclus dans ladite chaque séquence de segment de route vers un segment de route voisin du segment de route qui est accessible à la destination comprend :
l'obtention d'un produit de toutes les probabilités de virage à partir de chaque segment de route dans l'au moins un segment de route inclus dans ladite chaque séquence de segment de route vers le segment de route voisin du segment de route qui est accessible à la destination, en tant que probabilité combinée de ladite chaque séquence de segment de route ;
la sélection de N séquences de segments de route à partir des M séquences de segments de route en tant que résultats d'interrogation de trajet selon la probabilité combinée de ladite chaque séquence de segment de route.

5. Procédé selon la revendication 4, dans lequel la sélection de N séquences de segments de route à partir des M séquences de segments de route en tant que résultats d'interrogation de trajet selon la probabilité combinée de ladite chaque séquence de segments de route comprend :
la prise en compte de N séquences de segments de route avec une probabilité combinée maximale en tant que résultats d'interrogation de trajet ; ou
la prise en compte d'une séquence de segment de route dont la probabilité combinée est supérieure ou égale à un seuil de probabilité prédéfini, en tant qu'une séquence de segment de route dans les N séquences de segments de route.

6. Appareil d'interrogation de trajet, comprenant :
un moyen (21) pour obtenir des données d'interrogation qui comportent un emplacement de départ et une destination ;
un moyen (22) pour obtenir M séquences de segments de route selon les données d'interrogation, chaque séquence de segment de route dans les M séquences de segments de route comprenant au moins un segment de route, M étant un entier supérieur ou égal à 2 ;
un moyen (23) pour sélectionner N séquences de segments de route à partir des M séquences de segments de route en tant que résultats d'interrogation de trajet selon une probabilité de virage de chaque segment de route dans l'au moins un segment de route inclus dans ladite chaque séquence de segment de route vers le segment de route voisin du segment de route qui est accessible à la destination, N étant un entier supérieur ou égal à 1 et inférieur ou égal à M ;
un moyen pour générer les résultats de l'interrogation de trajet ;
un moyen (31) pour obtenir au moins une trajectoire historique d'utilisateur d'atteinte de la destination selon la destination ;
un moyen (31) pour obtenir une séquence de segment de route historique correspondant à chaque trajectoire historique d'utilisateur dans l'au moins une trajectoire historique d'utilisateur ;
l'appareil étant en outre **caractérisé par** :
un moyen (31) pour, selon la séquence de segment de route historique correspondant à ladite trajectoire historique de chaque utilisateur, obtenir le nombre de premières trajectoires de passage de chaque segment de route incluses dans la séquence de segment de route historiques, et le nombre respectif de secondes trajectoires de passage du segment de route, puis de passage respectivement de chaque segment de route voisin du segment de route qui est accessible à la destination ; et
un moyen (31) pour obtenir un rapport respectif du nombre respectif de secondes trajectoires au nombre de premières trajectoires en tant que probabilité de virage de chaque segment de route inclus dans la séquence de segment de route historique au segment de route de chaque segment de route voisin qui est accessible à la destination.

7. Appareil selon la revendication 6, dans lequel le moyen (31) pour obtenir au moins une trajectoire historique d'utilisateur d'atteinte de la destination selon la destination comprend :
un moyen (31) pour obtenir une région de réseau routier urbain à laquelle appartient la destination selon la destination ; et
un moyen (31) pour, selon la région de réseau routier urbain à laquelle appartient la destination, obtenir au moins une trajectoire historique d'utilisateur d'atteinte de la région de réseau routier urbain à laquelle appartient la destination, en tant qu'au moins une trajectoire historique d'utilisateur pour atteindre la destination.

8. Appareil selon la revendication 7, dans lequel l'appareil comprend en outre :
un moyen (41) pour diviser le réseau routier urbain avec un espacement désigné pour générer plusieurs régions de réseau routier urbain dans le réseau routier urbain.

9. Appareil selon l'une quelconque des revendications 6 à 8, dans lequel le moyen (23) pour sélectionner N séquences de segments de route à partir des M séquences de segments de route en tant que résultats d'interrogation de trajet selon une probabilité de virage à partir de chaque segment de route dans l'au moins un segment de route inclus dans ladite chaque séquence de segment de route vers le segment de route voisin du segment de route qui est accessible à la destination comprend :
un moyen (23) pour obtenir un produit de toutes les probabilités de virage à partir de chaque segment de route dans l'au moins un segment de route inclus dans ladite chaque séquence de segment de route vers le segment de route voisin du segment de route qui est accessible à la destination, en tant que probabilité combinée de ladite chaque séquence de segment de route, et
un moyen (23) pour sélectionner N séquences de segments de route à partir des M séquences de segments de route en tant que résultats d'interrogation de trajet selon la probabilité combinée de ladite chaque séquence de segment de route.

10. Appareil selon la revendication 9, dans lequel le moyen pour sélectionner N séquences de segments de route à partir des M séquences de segments de route en tant que résultats d'interrogation de trajet selon la probabilité combinée de ladite chaque séquence de segments de route comprend :
un moyen (23) pour prendre en compte N séquences de segments de route avec une probabilité combinée maximale en tant que résultat d'interrogation de trajet ; ou
un moyen (23) pour prendre en compte une séquence de segment de route dont la probabilité combinée est supérieure ou égale à un seuil de probabilité prédéfini, en tant qu'une séquence de segment de route dans les N séquences de segments de route.

11. Support de stockage informatique non volatile dans lequel un ou plusieurs programmes sont stockés, un appareil selon l'une quelconque des revendications 6 à 10 étant activé pour exécuter le procédé selon l'une quelconque des revendications 1 à 5 lorsque lesdits un ou plusieurs programmes sont exécutés par l'appareil.
